(19) Europäisches Patentamt
European Patent Office
Office européen des brevets

(11) **EP 1 054 248 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
***G01N 9/08*** *(2006.01)*

(21) Anmeldenummer: **00108355.9**

(22) Anmeldetag: **15.04.2000**

(54) **Flüssigkeit zum Messen der Dichte von Körpern**

Fluid for measuring the density of solid bodies

Fluide pour mesurer la densité d'un corps solide

(84) Benannte Vertragsstaaten:
**CH DE FR GB LI**

(30) Priorität: **27.04.1999 DE 19919011**

(43) Veröffentlichungstag der Anmeldung:
**22.11.2000 Patentblatt 2000/47**

(73) Patentinhaber: **Mettler-Toledo AG**
**8606 Greifensee (CH)**

(72) Erfinder:
• **Schnyder, Max**
**8712 Stäfa (CH)**
• **Nufer, Bruno**
**8308 Illnau (CH)**

(56) Entgegenhaltungen:
**DD-A- 288 228        DE-A- 3 739 711**
**US-A- 4 813 283      US-A- 5 076 107**
**US-A- 5 091 105**

• **PATENT ABSTRACTS OF JAPAN vol. 009, no. 016 (P-329), 23. Januar 1985 (1985-01-23) & JP 59 163539 A (ONO PHARMACEUTICAL COMPANY), 14. September 1984 (1984-09-14)**
• **KOHLRAUSCH F: "Praktische Physik" 1968 , 22. AUFLAGE, BAND 1, B.G. TEUBNER , STUTTGART DE XP002261603 * Seite 303 - Seite 310 ***

Bemerkungen:
Die Akte enthält technische Angaben, die nach dem Eingang der Anmeldung eingereicht wurden und die nicht in dieser Patentschrift enthalten sind.

**Beschreibung**

Die Erfindung liegt auf dem Gebiet der Bestimmung der Dichte von Festkörpern oder damit verwandter Eigenschaften wie des Volumens und spezifischen Gewichts und betrifft die Verwendung einer Flüssigkeit in Geräten für die Dichtebestimmung von Festkörpern, die Verwendung der Flüssigkeit zum Messen der Dichte von Festkörpern sowie ein Messgerät für die Dichtebestimmung von Festkörpern.

Beim Messen der Dichte von Festkörpern wird der jeweilige Körper für gewöhnlich einmal in trockenem Zustand und dann in einer Flüssigkeit, normalerweise destilliertem Wasser, gewogen und aus den so gewonnenen Angaben werden die Dichte, das spezifische Gewicht oder/und das Volumen bestimmt. Es sind verschiedene Anordnungen und Verfahren bekannt, die alle eine Flüssigkeit benützen, in welche die Probe getaucht wird.

Dies geht bei Körpern größerer Dichte als Wasser recht gut. Bei Körpern geringerer Dichte treten aber deshalb Schwierigkeiten auf, weil die Körper im Wasser schwimmen. Nun ist man dazu übergegangen, solche Körper geringerer Dichte in alkoholischer Flüssigkeit an Stelle von Wasser zu wägen. Es hat sich aber gezeigt, dass bei Überprüfung der Messergebnisse die Genauigkeit und Reproduzierbarkeit derselben, mindestens für manche Anwendungsfälle, zu wünschen übrig lässt - Alkohol ist leicht flüchtig, was zu einer Veränderung der Dichte der Flüssigkeit führt.

Destilliertes Wasser ist als Medium problemlos zu handhaben. Es hat aber den Nachteil, vergleichsweise leicht Gase, insbesondere $CO_2$, zu absorbieren und die Oberflächen der eingetauchten Gegenstände schlecht zu benetzen. An rauen Oberflächen können Gasblasen hängen bleiben, welche die Messung verfälschen. Zwar sind Methoden der Entgasung mittels Ultraschall bekannt, doch bedingt dies einen zusätzlichen apparativen Aufwand, und überdies ergibt sich ein Energieeintrag in die Flüssigkeit mit der Folge einer Temperaturzunahme. Andere Flüssigkeiten für die Dichtebestimmung sind bekannt, doch vermögen sie die genannten Nachteile nur teilweise zu überwinden. So benetzt z. B. das sogenannte FC 40 gut, ist mit einer Dichte von 1,8 aber nur für die Messung von Festkörpern höherer Dichte oder für Verfahren zur Dichtemessung an schwimmenden Körpern geeignet. Ausserdem verdunstet es ziemlich leicht, was zu Dichteänderungen führt.

In der US 5,076,107 A wird eine Vorrichtung zur Messung von Volumen- oder Gewichtsänderungen eines in eine Flüssigkeit eingetauchten Testobjekts offenbart. Es wird das resultierende Gewicht des Testobjekts, also das aufgrund des Auftriebs der Flüssigkeit verringerte Gewicht, bestimmt wird.

In der US 4,813,283 A wird eine Vorrichtung zur Dichtebestimmung offenbart, welche auf der hydrostatischen Methode beruht. Eine elektronische Waage zusammen mit einer Wägekammer und einer Messkammer ist in einer luftdichten Umgebung angeordnet, wobei die elektronische Waage im Wesentlichen eine elektronisch angesteuerte Balkenwaage ist, deren Waagschalen in der Wägekammer bzw. in der Messkammer angeordnet sind.

In der DD 288 228 A wird ein Verfahren und eine Vorrichtung zur Messung der Volumenschwindung von Kunststoffen offenbart. Eine Polymervorstufe wird in ein geeignetes Gefäss eingebracht und mit einer inerten Flüssigkeit überschichtet. Anschliessend wird das Gefäss in eine inerte Flüssigkeit getaucht und die Änderung des Auftriebs des Gefässes bzw. die Auslenkung eines am Gefäss befestigten Drahtarms während der Polymerisierung mit einem Kathetometer oder einem opto-elektronischen System untersucht.

Deshalb ist es ein Ziel der vorliegenden Erfindung, ein Verfahren und eine Vorrichtung anzugeben, welche die Dichtebestimmung mit einer höheren Genauigkeit und Reproduzierbarkeit ermöglichen.

Die Anmelderin hat diesbezüglich eine lange Reihe von Versuchen durchgeführt, die letztlich zu der Erkenntnis führte, dass das Ersetzen des destillierten Wassers durch eine Flüssigkeit mit den in den Patentansprüchen 1, 7 und 8 angegebenen Merkmalen und Eigenschaften den angestrebten Effekt ergibt. Bei Kenntnis dieser Merkmalskombination ist es dem Fachmann ohne großen Aufwand möglich, eine entsprechende Flüssigkeit mit dieser Kombination aufzufinden.

Im Rahmen der Erfindung ist es natürlich durchaus möglich, Flüssigkeitsgemische zu verwenden. In einem solchen Falle ist mit Vorteil darauf zu achten, dass es sich um ein annähernd azeotropes Gemisch handelt, bei dem definitionsgemäß alle Komponenten im wesentlichen denselben Siedepunkt besitzen, so dass eine Entmischung bzw. eine Veränderung des Gemisches durch unterschiedliche Verdunstung über längere Zeit und damit eine Veränderung der Eigenschaften des Gemisches nicht stattfindet. Nahezu azeotrope Gemische sind zum Beispiel als Ersatz für FCKWhaltige Flüssigkeiten in verschiedenen Zusammensetzungen vorgeschlagen worden, so dass der Fachmann bei Kenntnis der Lehre der vorliegenden Erfindung eine Auswahl treffen kann.

Grundsätzlich ist ein langsames Verdunsten der Flüssigkeit erwünscht. Dies ist ja gerade bei der bekannten Verwendung von Alkohol nicht der Fall. Deshalb wird erfindungsgemäß die Verwendung einer Flüssigkeit mit der im Anspruch 2 umschriebenen Eigenschaft vorgeschlagen.

Ein Problem bei der Verwendung von sich von Wasser unterscheidenden Flüssigkeiten liegt in der natürlich vorkommenden Feuchtigkeit, welche die Eigenschaften der Flüssigkeit beeinflussen kann. Deshalb wird erfindungsgemäß die Verwendung einer Flüssigkeit mit den Merkmalen des Anspruches 3 vorgeschlagen.

Während die bekannte Verwendung von Wasser hinsichtlich Umweltverträglichkeit und Toxizität an sich unproblematisch ist, kann die Verwendung einer anderen Flüssigkeit diesbezüglich ein gewisses Problem darstellen. Mit Vorteil wird deshalb eine Flüssigkeit verwendet, die weder Fluorchlorkohlenwasserstoffe enthält noch giftig ist.

Natürlich könnte auch die Entflammbarkeit einer sich von Wasser unterscheidenden Flüssigkeit ein Problem darstellen. Ein besonderer Vorteil der Erfindung liegt darin, dass Flüssigkeiten mit den charakteristischen Merkmalen zur Verfügung stehen, deren Flammpunkte über 50°C und deren Selbstentzündungstemperaturen über 350°C liegen, die also bezüglich Feuergefahr unbedenklich sind.

Bei den von der Anmelderin durchgeführten Versuchen und Tests wurde gefunden, dass hervorragende, und um mindestens eine Größenordnung genauere Messergebnisse erhalten werden können, wenn eine Flüssigkeit verwendet wird, die mindestens einen Siliziumwasserstoff enthält. Siliziumwasserstoffe werden nach der IUPAC-Regel D-6.14 auch als Silane bezeichnet und umfassen verzweigte und unverzweigte Siliziumwasserstoffe. Dabei sind Substitutionen im Rahmen der Erfindung durchaus möglich (zum Beispiel Silyle). Besonders bevorzugt sind Cyclosilane, welche die meisten der obigen Merkmalsanforderungen erfüllen, z. B. alkoholische Cyclosilane, d.h. solche, bei denen an das Siliziumatom mindesten ein Alkohol, wie ein Äthyl-, Methyl, Buthyl-, Propyl-, Isopropylalkohol oder dergleichen gebunden ist. Natürlich sind dabei Substitutionen solcher Alkohole durch Ester (im allgemeinen niederwertige), seltener durch Äther möglich. Besonders bevorzugt sind Flüssigkeiten, bei denen die an das jeweilige Siliziumatom gebundene alkoholische Gruppe eine Methylgruppe ist.

Cyclosilane mit wenigstens vier Siliziumatomen, d.h. relativ größere Ringgebilde, sind bevorzugt. Dabei können vorzugsweise wenigstens zwei alkoholische Gruppen mit jedem Siliziumatom, insbesondere in verzweigter Form, verbunden sein.

In der Praxis haben sich Octamethyl-Cyclotetrasiloxan und höhere Ringverbindungen, wie Dekamethyl-Cyclopentasiloxan, vortrefflich bewährt. Als besonderes vorteilhafte Eigenschaft dieser Verbindungen hat sich die gute Benetzung (Oberflächenspannung bei 25°C 18 bis 19 N/m) herausgestellt. Die Messgenauigkeit beeinträchtigende Gasbläschen am zu vermessenden Körper werden dadurch verhindert oder sofort wieder weggeführt. Es sei erwähnt, dass solche Cyclosilane für andere Zwecke, wie als Kühlflüssigkeiten oder Reinigungs- bzw. Lösungsmittel, auf dem Markt sind und sich durch folgende Eigenschaften auszeichnen: geringere Dichte als 1 g/cm$^3$, geringe Toxizität (ohne Einschränkung im Verkauf), eine Selbstentzündungstemperatur von etwa 390-400°C und darüber, einen Flammpunkt zwischen 50 und 80°C, eine Hygroskopizität (Wasseraufnahme) von maximal 0,1%, einen um einen Faktor von etwa 4 tieferen Dampfdruck als Wasser, einer im allgemeinen hohen Beständigkeit der physikalischen Eigenschaften über die Zeit bei verschiedenen Temperaturen und eine gute Benetzbarkeit (derart, dass ein Entgasen, wie bei Wasser, sogar überflüssig wird). Viele solcher Cyclosilane enthaltende Flüssigkeiten sind nahezu azeotrope Mischungen.

Die folgenden Beispiele sollen die Vorteile der Verwendung der oben beschriebenen Flüssigkeiten veranschaulichen. Es wurden jeweils Kunststoffteile mit unregelmässiger Oberfläche getestet, deren nahe 1 g/cm$^3$ gelegene Dichte in herkömmlicher Weise schwierig zu bestimmen ist.

Beispiel 1:

Von einer Uhrenplatine aus Kunststoff sollte die Dichte ermittelt werden. Ihr Trockengewicht betrug 0.2441 g. Es wurde eine erste Serie von fünf Vergleichsmessungen in Wasser durchgeführt, die auf Grund der Formel

$$d = \frac{Trockengewicht \cdot (d_0 - d_L)}{Trockengewicht - Nassgewicht} + d_L$$

wobei $d_0$ die Dichte der Flüssigkeit und $d_L$ die mittlere Luftdichte ist, jeweils eine Dichte von 1.610; 1.628; 1.598; 1.640 und 1.640 erbrachten (Werte der Dichten - hier und nachfolgend - jeweils in g/cm$^3$). Die Streuung betrug demnach 0.042.

In einer zweiten Messserie wurde in erfindungsgemäßer Weise ein nahezu azeotropes Gemisch von etwa 75 Gewichtsprozent Octamethylcyclosiloxan und 25 Gew.-% Dekamethylcyclopenta-Siloxan verwendet, um die Dichte derselben Uhrenplatine zu bestimmen. Die Dichte dieser Mischung betrug bei 25°C 0.952. Das Trockengewicht der Uhrenplatine war wie oben angegeben und die in dieser Mischung nach der obigen Formel gefundene Dichte betrug in fünf Messungen 1.655; 1.654; 1.654; 1.654 und 1.655, was einer Streuung der Messwerte von nur 0.001 entspricht, also eine um mehr als eine Größenordnung höhere Genauigkeit und Reproduzierbarkeit erbrachte!

Beispiel 2:

Derselbe Vergleich wurde nun an einem anderen Gegenstand, nämlich einem Gummipuffer, durchgeführt. Sein Trockengewicht betrug 0.5028g. Die Messungen in Wasser ergaben Dichtewerte von 1.410; 1.412; 1.406; 1.410 und 1.405. Dies entspricht einer Streuung von nur 0.007.

Allerdings wurde dieses an sich bereits gute Ergebnis bei Messungen unter Verwendung des in Beispiel 1 genannten Gemisches noch übertroffen, denn die in fünf Messungen ermittelten Dichtewerte betrugen 1.414; 1.414;

1.414; 1.414 und 1.415. Die Streuung betrug somit nur 0.001.

Beispiel 3:

Ein weiterer Vergleich unter Verwendung der in Beispiel 1 genannten Flüssigkeiten wurde mit einem Kunststoffsupport durchgeführt. Das Trockengewicht betrug 0.7256 g. Die Messungen in Wasser ergaben Dichtewerte von 1.582; 1.607; 1.619; 1.612 und 1.619. Dies entspricht einer Streuung von 0.037.
Mit Hilfe der in Beispiel 1 genannten, beinahe azeotropen Mischung ergaben sich Dichtewerte von 1.623; 1.623; 1.623; 1.624 und 1.622. Die Streuung betrug demnach 0.002.

Beispiel 4:

Nun wurde eine Achse mit zwei O-Ringen aus Kunststoff mit einem Trockengewicht von 0.9007 g der Prüfung unterzogen. Bei der Messung in Wasser ergaben sich Dichtewerte von 1.515; 1.515; 1.515; 1.498 und 1.498. Die Streuung betrug somit 0.017.
Bei der Dichtebestimmung mittels des genannten Gemisches ergaben sich Dichtewerte von 1.520; 1.519; 1.519; 1.519 und 1.519, was einer Streuung von nur 0.001 entspricht.

Beispiel 5:

In diesem Beispiel wurde eine Teflon-Verschlusskappe mit einem Trockengewicht von 1,8940 g getestet. Die Dichtewerte in Wasser waren in fünf Messungen 2.143; 2.142; 2.145; 2.142 und 2.146. Die Streuung betrug nur 0.004.
Dagegen betrugen die Dichtewerte bei einer Nassgewichtsbestimmung im genannten Gemisch 2.147; 2.148; 2.146; 2.146 und 2.148, womit die Streuung noch tiefer, nämlich bei 0.002, lag.
In weiteren Versuchen wurde die Zusammensetzung des Gemisches variiert, wobei eine Mischung etwa 95 Gew.-% Octamethylcyclosiloxan und 5 Gew.-% Dekamethylcyclopenta-Siloxan (Dichte bei 25°C: 0.951) aufwies, ein anderes Gemisch das umgekehrte Verhältnis hatte (Dichte bei 25°C: 0.956). In beiden Fällen ergaben sich ähnliche Streuungswerte wie in den obigen Beispielen 1 bis 5. Prinzipiell waren die Streuungswerte im Falle der Mischung von 5 Gew.-% Octamethylcyclosiloxan und 95 Gew.-% Dekamethylcyclopenta-Siloxan etwas schlechter als die in den obigen Beispielen, was vielleicht auf die größere Nähe zur Dichte von Wasser zurückzuführen ist, doch waren sie immer noch besser als bei der herkömmlichen Verwendung von Wasser. Vor allem zeigte sich ein besonders günstiges Verhalten dieser letzteren Mischung, wenn die Temperatur variiert wurde: Ihre Dichte veränderte sich bei einer Variation zwischen 14 und 30°C praktisch linear (!) von 0.965 auf etwas unter 0.95, ein Phänomen, das bei den anderen beiden Mischungen nur in angenäherter Form auftrat.
Aus diesen verschiedenen Vergleichen wurde geschlossen, dass die Verwendung weiterer, ähnlicher Flüssigkeiten in vorteilhafter Weise möglich ist, sofern nur die im Anspruch 1 bzw. den Ansprüchen 7 und 8 angegebenen Kriterien erfüllt werden. Die Flüssigkeit lässt sich sowohl für ein Verfahren zum Messen der Dichte von Festkörpern als auch in einem Messgerät für die Dichtebestimmung von Festkörpern verwenden. Außerdem zeichnet sie als erfinderisches Bestandteil ein herkömmliches Messgerät für die Dichtebestimmung von Festkörpern mit einer Waage und einem mit Flüssigkeit gefüllten Behälter, in welche der Festkörper für eine Wägung eingetaucht wird, aus, in dem das üblicherweise vorhandene destillierte Wasser durch die Flüssigkeit mit den besonderen Eigenschaften ersetzt ist.

**Patentansprüche**

1.  Verwendung einer Flüssigkeit zum Messen der Dichte von Festkörpern, welche die folgenden Eigenschaften aufweist:

    - ihre Dichte ist kleiner als jene von Wasser;
    - ihre Oberflächenspannung ist bedeutend kleiner als jene von Wasser;
    - sie verdunstet langsamer als Wasser, wobei ihr Dampfdruck um einen Faktor von wenigstens 2 geringer ist, und
    - ihre Wasseraufnahme bzw. Hygroskopizität ist kleiner als 1%;
    - sie ein nahezu azeotropes Gemisch darstellt.

2.  Verwendung einer Flüssigkeit nach Anspruch 1, deren Dampfdruck um einen Faktor von wenigstens 4 geringer als der von Wasser ist.

3.  Verwendung einer Flüssigkeit nach Anspruch 1, deren Wasseraufnahme maximal 0,5%, insbesondere weniger als 0,1%, beträgt.

**4.** Verwendung einer Flüssigkeit nach Anspruch 1, welche frei von FCKW und nicht toxisch ist.

**5.** Verwendung einer Flüssigkeit nach einem der vorhergehenden Ansprüche, die mindestens einen nicht toxischen Siliziumwasserstoff, bevorzugt Cyclosilan enthält.

**6.** Verwendung einer Flüssigkeit nach Anspruch 5 mit dem Siliziumwasserstoff Cyclosilan, wobei am Cyclosilan mindestens eine Kohlewasserstoffverbindung durch eine andere funktionale Gruppe ersetzt ist.

**7.** Verwendung einer Flüssigkeit in einem Messgerät für die Dichtebestimmung von Festkörpern, welche die Eigenschaften gemäss einem der vorstehenden Ansprüche aufweist.

**8.** Messgerät für die Dichtebestimmung von Festkörpern mit einer Waage und einem mit Flüssigkeit gefüllten Behälter, in welche der Festkörper für eine Wägung eingetaucht wird, **dadurch gekennzeichnet, dass** die Flüssigkeit die Eigenschaften gemäss einem der Ansprüche 1 bis 6 aufweist.


**Claims**

**1.** Use of a fluid for measuring the density of solid bodies, said fluid having the following properties:

- its density is smaller than the density of water;
- its surface tension is significantly smaller than the surface tension of water;
- it evaporates at a rate that is slower than the evaporation rate of water, its vapor pressure being smaller than the vapor pressure of water by at least a factor of 2; and
- its water absorption or hygroscopicity is smaller than 1%;
- it represents a nearly azeotropic mixture.

**2.** Use of a fluid according to claim 1, whose vapor pressure is smaller than the vapor pressure of water by at least a factor of 4.

**3.** Use of a fluid according to claim 1, whose water absorption is at most 0.5%, in particular less than 0.1%.

**4.** Use of a fluid according to claim 1, which is free of fluoro-chloro carbohydrates and is non-toxic.

**5.** Use of a fluid according to one of the preceding claims, wherein the fluid comprises at least one non-toxic silicon hydride, preferably cyclo-silane.

**6.** Use of a fluid according to claim 5, comprising the silicon hydride cyclo-silane, wherein at least one hydrocarbon group on the cyclo-silane is replaced by another functional group.

**7.** Use of a fluid in a measuring instrument for measuring the density of solid bodies, wherein said fluid has the properties according to one of the preceding claims.

**8.** Measuring instrument for measuring the density of solid bodies with a weighing scale and a container filled with a fluid into which the solid body is immersed while being weighed, **characterized in that** the fluid has the properties according to one of the claims 1 to 6.


**Revendications**

**1.** Utilisation d'un liquide pour la mesure de la densité de solides, qui présente les propriétés suivantes :

- sa densité est inférieure à celle de l'eau ;
- sa tension superficielle est nettement inférieure à celle de l'eau ;
- il s'évapore plus lentement que l'eau, sa pression de vapeur étant plus faible d'un facteur d'au moins 2, et
- son absorption d'eau ou hygroscopicité est inférieure à 1 % ;

- il représente un mélange pratiquement azéotrope.

2. Utilisation d'un liquide selon la revendication 1, dont la pression de vapeur est inférieure d'un facteur d'au moins 4 à celle de l'eau.

3. Utilisation d'un liquide selon la revendication 1, dont l'absorption d'eau est au maximum de 0,5 %, en particulier inférieure à 0,1 %.

4. Utilisation d'un liquide selon la revendication 1, qui est exempt de CFC et n'est pas toxique.

5. Utilisation d'un liquide selon l'une quelconque des revendications précédentes, qui contient au moins un hydrure de silicium non toxique, de préférence du cyclosilane.

6. Utilisation d'un liquide selon la revendication 5, avec l'hydrure de silicium cyclosilane, au moins un composé hydrogéné de carbone étant remplacé sur le cyclosilane par un autre groupe fonctionnel.

7. Utilisation d'un liquide dans un appareil de mesure pour la détermination de la densité de solides, qui présente les propriétés définies selon 1"une quelconque des revendications précédentes.

8. Appareil de mesure pour la détermination de la densité de solides avec une balance et un récipient rempli de liquide, dans lequel le solide est immergé pour une pesée, **caractérisé en ce que** le liquide présente les propriétés définies selon l'une quelconque des revendications 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5076107 A
- US 4813283 A
- DD 288228 A